# EUROPEAN PATENT APPLICATION

(11) **EP 1 964 714 A1**
(43) Date of publication of application: **03.09.2008**
(21) Application number: 07103264.3
(22) Date of filing: 28.02.2007
(51) Int. Cl.: B60N 2/70, A47C 7/46

(54) **Suspension arrangement for a seat**

(71) Applicant: L&P Swiss Holding Company, 9303 Wittenbach (CH)
(72) Inventor: Vanthournout, Olivier, 8930 Lauwe (BE)
(74) Representative: Banzer, Hans-Jörg

(57) **Abstract**

A suspension arrangement for a seat, whereby the suspension arrangement comprises at least one release system (7) coupled to a side margin (3) of a support structure (3, 4) of the suspension arrangement by means of a cable arrangement (8). In addition, the release system (7) is to be coupled to a seat frame (9) of the seat. The release system yields in accordance with a predetermined force deflection characteristic only when the load acting on the support structure (3, 4) exceeds a predetermined threshold value.

## Description

The present invention relates to a suspension arrangement for a seat.

In vehicle seats, it is well-known to provide a support for the upholstery of the seat by means of a support structure, preferably in the form of a platform element, that is suspended between two opposite side elements of a seat frame in such a manner as to provide resilient support for the upholstery. Suspension arrangements are known in which the support structure itself is flexible but substantially inextensible, and wherein tension springs are provided to support the support structure between the side elements of the seat frame. Other suspension arrangements are known wherein the support structure itself is resiliently extensible in a transverse direction, whereby in this case a support structure can be attached to side elements of the seat frame by link means that are substantially inextensible. Support structures of the latter kind are known, for example, from EP-A-0 128 407 and GB 2 316 604.

Safety requirements in relation to vehicle seats become increasingly rigorous, and thus, in the design of vehicle seats, those skilled in the art are constantly seeking measures that may be adopted in order to reduce personal injury that may occur to occupants of the seats in the event of a vehicle accident.

It has, for example, been proposed that the frames of vehicle seats should be adapted to allow a limited collapse in the event of the application of sudden loads exceeding those occurring in normal use, in order, for example, to reduce injury to an occupant due to sudden forward acceleration of the seat. This may occur, for example, if a vehicle is subjected to a sudden impact from the rear when a following vehicle collides therewith.

Arrangements for providing for the collapse of vehicle seat frames are, however, of complicated construction and are thus relatively expensive.

Consequently, in WO-A-03/045732 a seat suspension arrangement is proposed which provides a simplified means that will enable the occupant of the vehicle seat to be cushioned from a sudden forward acceleration applied to the vehicle seat frame, for example as a result of a collision. In particular, this seat suspension arrangement comprises a seatback platform element having side margins, and a collapsible extensible link means connected between one of the side margins and a side element of a corresponding seat frame. The link means are designed such that they substantially restrain the side margin from displacement during normal loading conditions and yield under abnormal loading conditions, whereby the seatback platform element itself is configured to provide limited resilient extension in normal use.

It is the object underlying the present invention to provide an improved suspension arrangement for a seat which allows to easily and reliably control the deflection of the suspension arrangement in the case of a collision if the suspension arrangement is incorporated into a vehicle seat frame. Furthermore, it is an object of the present invention to provide such a suspension arrangement which allows to control the deflection of the suspension arrangement in different zones of its support structure so as to reduce the risk of personal injury that may occur to an occupant of the seat in the event of a vehicle collision.

According to the present invention, this object is achieved by a suspension arrangement as defined by independent claim 1. The dependent claims define preferred and advantageous embodiments of the present invention.

According to an embodiment of the invention, a suspension arrangement for a seat, especially for a vehicle seat, is provided, which comprises a support structure having a first side margin and a second side margin, and at least one release system coupled to at least one of the first and second side margins of the support structure by a cable arrangement and to be coupled to a seat frame of the seat. The at least one release system is designed such that it does substantially not yield under a normal load acting on the support structure, which is below a predetermined threshold value, while it yields in accordance with a predetermined characteristic, especially in accordance with a predetermined deflection characteristic, under an abnormal load exceeding the threshold value.

The use of such a release system in combination with a cable arrangement, in particular in combination with a Bowden cable arrangement, allows to easily provide the suspension arrangement with several different release systems with different deflection characteristics in vertically spaced relationship so that the suspension arrangement can be provided with different force deflection characteristics in different zones of its support structure so that, for example, the position of the spine of an occupant during a vehicle collision can be steered in a certain way to minimize the risk of injury as far as possible. Furthermore, the use of such a plurality of different release systems allows to easily adapt the properties of the suspension arrangement, and in particular the properties of the support structure of this suspension arrangement, to the particular needs of the individual occupants.

According to an embodiment of the invention, the release system is coupled via cable arrangements to both side margins of the support structure and is arranged between the both side margins. According to an alternative embodiment, the release system may also be provided between one of the side margins of the support structure and a corresponding side element of the seat frame.

To provide the desired force deflection characteristic, the release system may comprise spring means of any kind, like gas springs, wire springs or air springs, etc.

According to an embodiment, the release system may comprise a combination of a gas spring with a regular wire spring so as to provide the desired deflection characteristic allowing the release system to yield or deflect starting from a predetermined load threshold value. According to another embodiment, the release system may comprise a V-shaped or S-shaped hook coupled via a cable arrangement between at least one of the side margins of the support structure and a corresponding side element of the seat frame.

In the event that the release system is arranged between the both side margins of the support structure, the release system may be coupled or fixed to a stiffening member running in a vertical direction of the support structure.

According to a further embodiment of the invention, the support structure itself comprises the vertical side margins in combination with a plurality of transverse elements extending between the two side margins, whereby according to a further embodiment these transverse elements are transverse wires being wound around the side margins or fixed to the side margins in any different manner so as to provide sufficient support to an occupant sitting on the respective seat. These transverse wires may be provided with a plurality of convolutions, preferably substantially sinuous convolutions, which extend in the vertical direction of the support structure.

The support structure may be designed such that it provides limited resilient support during normal use, while the transverse elements of the support structure may be designed such that they substantially straighten under a maximum normal loading condition so that these transverse elements allow for limited transverse stretching of the support structure itself. Under such a maximum load normally expected upon the seat, the transverse elements will adopt almost a straight line, and at this point the support structure will be resistant to further resilient extension so that forces placed on the support structure will be transmitted directly to the release system coupling the support structure to the seat frame.

According to an embodiment of the invention, the suspension arrangement is incorporated into a backrest of a seat, in particular into a backrest of a vehicle seat without, however, being limited to this preferred use and to this preferred type of seat.

In the following, exemplary embodiments of the invention will be described in detail. It is to be understood that the following description is given only for the purpose of illustrating the principles of the invention and it not to be taken in a limiting sense. Rather, the scope of the invention is defined only by the appended claims and is not intended to be limited by the exemplary embodiments described hereinafter.

Fig. 1 shows a suspension arrangement according to an embodiment of the invention.

Fig. 2 shows an exemplary deflection characteristic of a release system of the embodiment depicted in Fig. 1.

Fig. 3 shows several exemplary deflection characteristics of the several release systems used in the embodiment of Fig. 1.

Figs. 4 and 5 show detailed representations of one of the release systems of the embodiment shown in Fig. 1.

Fig. 6 shows a release system according to another embodiment of the invention using a gas spring in combination with a wire spring.

Figs. 7 and 8 show several views so as to explain the functionality of the release system shown in Fig. 6.

Fig. 9 shows an alternative release system according to a further embodiment of the invention.

Fig. 10 shows a further release system according to another embodiment of the invention.

Fig. 11 shows a further embodiment of the suspension arrangement of the invention.

Fig. 12 shows a possible implementation of a release system used in the embodiment of Fig. 11.

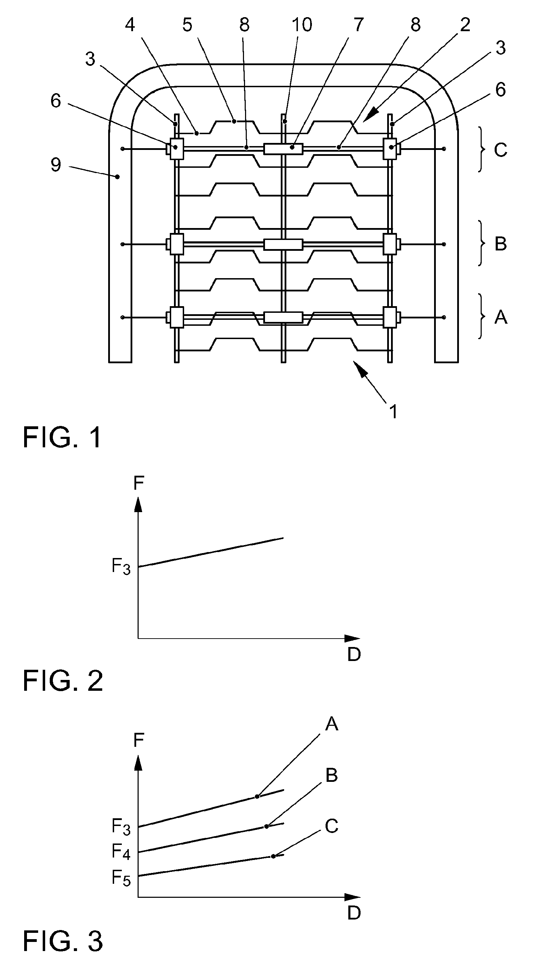

Fig. 1 shows a suspension arrangement according to a further embodiment of the invention.

The suspension arrangement 1 shown in Fig. 1 comprises a support structure in the form of a platform element comprising two side elements or side margins 3 and a plurality of transverse elements 4. In the embodiment of Fig. 1, the transverse elements 4 are transverse wires having convolutions 5 in a transverse direction and being fixed to the side margins 3, for example by being wound around the latter.

The suspension arrangement 1 of Fig. 1 comprises a plurality of release systems 7 arranged in vertically spaced relationship in different zones A-C of the support structure. As will be discussed in the following in more detail, the individual release systems 7 may have different deflection characteristics so that the overall resiliency and the overall deflection characteristic of the support structure can be individually adapted to the needs and desires of an occupant, and in particular the deflection can be controlled in the individual zones of the support structure such that, for example in the case of a collision when incorporating the support structure into a vehicle seat, the spine of the occupant is directed in a predetermined direction so as to minimize the risk of injury to the occupant.

As shown in Fig. 1, the individual release systems 7 are arranged between the two side margins 3 of the support structure, and in particular the release systems 7 are arranged in the middle between the two side margins 3, although there is no requirement to do so. The support structure also comprises a vertical stiffening member 10 in its center portion, which is also often referred to as a "flexcord". In the event that the release systems are arranged between the two side margins 3 and in particular in the center portion of the support structure, it is possible to fix or couple the individual release systems 7 to this central stiffening member 10 to reduce packaging space.

The support structure of the kind described above, comprising transverse wires 7 in combination with vertical side margins 3 and preferably also the vertical stiffening member 10, is also often referred to as a "flexmat".

As shown in Fig. 1, the individual release systems 7 are coupled, on the one hand, to a respective one of the side margins 3 using support members 6, whereby on the other hand the release systems 7 are coupled to a seat frame 9 of the corresponding seat. In particular, this coupling is achieved by means of a cable arrangement 8, in particular a Bowden cable arrangement, whereby the sheath of the cable arrangement 8 is arranged between the respective release system 7 and a corresponding one of the support members 6, while the wire of the cable arrangement runs through the corresponding sheath and the support member 6 and couples the release system 7 to one of the side elements of the seat frame 9.

The individual release systems 7 depicted in Fig. 1 are designed such that they substantially do not yield or deflect under a load below a predetermined threshold value, while they yield or deflect in accordance with a predetermined deflection characteristic under a load exceeding this threshold value.

Fig. 2 shows an exemplary deflection characteristic of one of the release systems 7 shown in Fig. 1. As can be taken from Fig. 2, the release system only yields if the load F acting on the support structure exceeds a predetermined threshold value F₃, whereby thereafter the deflection D of the release system increases as the load F increases similar to a normal spring characteristic.

Thus, in the suspension arrangement of Fig. 1, the individual forces which are existing in the individual cables 8 during loading of the suspension arrangement are brought to or concentrated on the individual release systems 7 which provide a certain force deflection characteristic, for example a force deflection characteristic similar to that shown in Fig. 2, starting from a certain load. By placing different types of release systems 7 in different zones of the suspension arrangement 1, a unique and pre-defined deflection characteristic of the overall suspension arrangement can be achieved in the individual zones (see zones A-C shown in Fig. 1).

Fig. 3 shows examples for different force deflection characteristics of the individual release systems 7 arranged in the zones A-C of Fig. 1. Curve A represents the force deflection characteristic of the release system arranged in zone A, curve B represents that of the release system arranged in zone B, and curve C is the force deflection characteristic of the release system arranged in zone C of the suspension arrangement of Fig. 1. As can be seen from Fig. 3, the threshold values F₃-F₅ of the individual release systems 7 placed in the zones A-C are different, whereby the release system 7 of zone C starts to yield earlier than the release system 7 of zone B, and the release system 7 of zone C yields or deflects only if the load F acting on the support structure of the suspension arrangement exceeds a threshold value F₃ which is larger than the threshold values F₄ and F₅ of the release systems arranged in zones B and C.

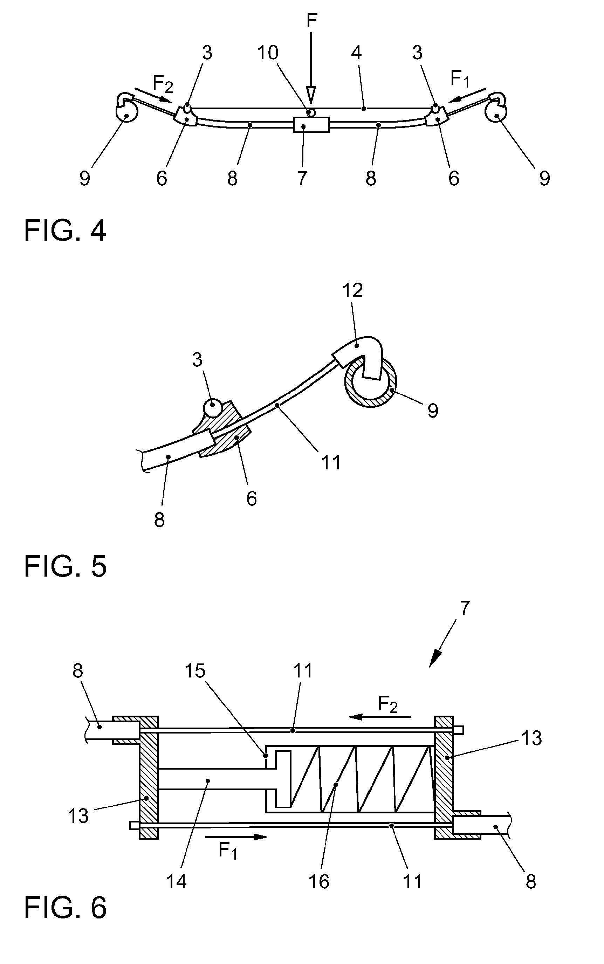

Figs. 4 and 5 show different views of the suspension arrangement of Fig. 1, whereby Fig. 4 shows a side view of the suspension arrangement, while Fig. 5 shows an enlarged view of the coupling of one of the cables 8 to the seat frame 9.

As can be taken from Fig. 4, when a load F acts on the support structure of the suspension arrangement, forces F₁ and F₂ act on the individual cable arrangements 8 coupling the corresponding release system 7 to the both side elements of the seat frame 9. Fig. 5 shows that the sheath of each Bowden cable arrangement is supported at one of the support members 6 coupled to one of the side margins 3 of the support structure. The wire 11 of the respective Bowden cable arrangement, which runs through the sheath, extends through this support member 6 and is attached to one of the side elements of the seat frame 9 using a hooked end portion 12.

The release system 7 is designed such that it starts to deflect or to yield only if the forces acting on both cable arrangements 8 exceed the predetermined threshold value, that is if F₁ + F₂ > F₃. During normal use of the suspension arrangement, the resiliency and the deflection of the suspension arrangement is defined mainly by the dimensions and the shape of the transverse wires 7 and the central stiffening member 10. In the case of excessive load, that is F₁ + F₂ > F₃, for example in the event of a vehicle collision, the corresponding release system 7 starts to yield so that the deflection of the overall system is defined by the force deflection characteristic of the release system.

Fig. 6 shows a possible implementation of a release system according to an embodiment of the invention.

According to the embodiment of Fig. 6, the release system 7 comprises a combination of a gas spring with a normal helical spring 16 arranged in a housing 15 of the gas spring and coupled to a piston 14 of the gas spring.

The gas spring is a hydropneumatic adjusting element, comprising the housing 15 acting as a pressure tube and the piston 14, whereby often the housing 15 is filled with compressed nitrogen which acts with equal pressure on differently dimensioned cross-sectional areas of the piston 14. This produces a force in the extension direction. This extension force can be exactly defined within physical limits through the appropriate selection of the filling pressure.

Theoretically, such a gas spring will exhibit only a constant force along its deflection (in reality, additional friction forces will have to be considered). Therefore, by adding the additional spring 16 to the gas spring, the force deflection characteristics shown in Figs. 2 and 3 can be achieved, whereby by dimensioning and designing both the gas spring 14, 15 and the wire spring 16 in accordance with the requirements of the respective application, the force deflection characteristic of the release system can be individually adapted very easily.

As shown in Fig. 6, the release system comprises two end members 13, whereby each end member 13 is coupled to the sheath of one of the cable arrangements 8, while the wires running through the sheaths of the cable arrangements 8 also extend through the end members 13 and are attached to the respective opposite end member. The wire spring 16, on the one hand, is supported at the piston 14 of the gas spring and, on the other hand, at one of the end members 13 of the release system 7.

As shown in Figs. 1, 4 and 6, the individual release systems 7 act substantially in the horizontal direction of the suspension arrangement, that is to say the cable arrangements 8 extend substantially in the horizontal direction of the suspension arrangement.

As already indicated above, each release system of the embodiment of Fig. 1 is arranged between the two side margins 3 of the support structure. However, as will be clear from the following description of additional embodiments, it is not absolutely necessary to place the release system 7 between the two side margins 3, but the release system 7 may be even arranged between one of the side margins 3 and one of the side elements of the seat frame 9. Furthermore, it is principally possible to place the release system 7 everywhere in the seat frame.

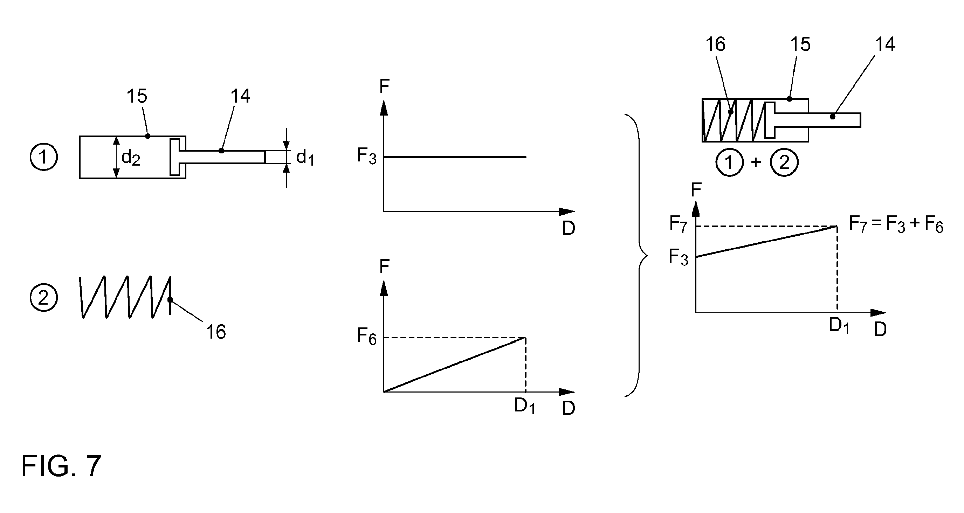

Fig. 7 shows several views to illustrate the effect of the wire spring being added to the gas spring in the embodiment of Fig. 6.

As shown in Fig. 7, the gas spring itself substantially has a constant force deflection characteristic, which means that the force F₃ is constant along its deflection D. In particular, this force deflection characteristic mainly depends on the ratio between the outer diameter d₁ of the piston 14 and the inner diameter d₂ of the gas spring housing 15.

The wire spring 16 has the known spring characteristic shown in Fig. 7, whereby the deflection steadily increases as the force acting on the wire spring 16 increases.

When combining the gas spring with the wire spring in a single system as depicted at the right hand portion of Fig. 7, a force deflection characteristic similar to that shown in Fig. 2 can be achieved, whereby the threshold value F₃, that is the force when the release system starts to deflect, is defined by the force deflection characteristic of the gas spring, while the force deflection characteristic curve after the release system has started to deflect is defined by the characteristic of the wire spring 16 such that in Fig. 7 F₇ = F₃ + F₆.

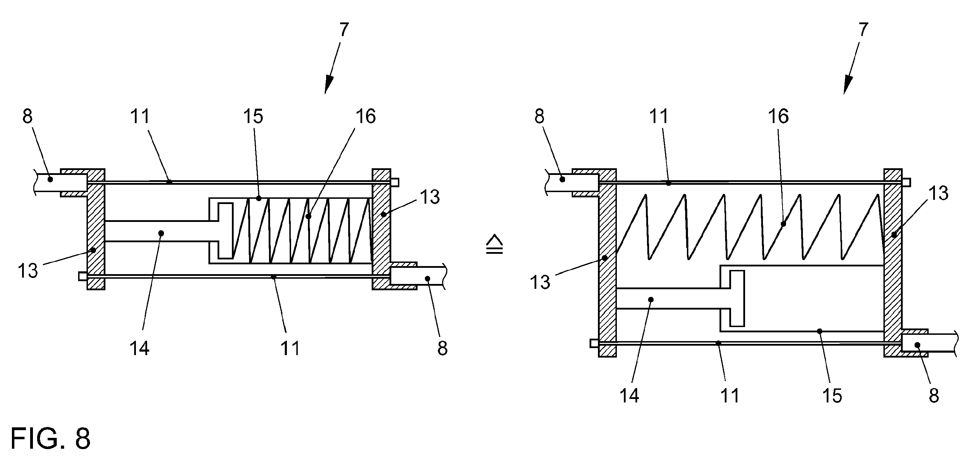

Fig. 8 shows a variant of the embodiment of the release system shown in Fig. 6. In the embodiment of Fig. 6, the wire spring 16 is integrated into the housing 15 of the gas spring. In the variant of this embodiment shown in Fig. 8, the release system 7 comprises the gas spring and the wire spring as two separate components which are both arranged between the two end members 13 of the release system 7. From a technical or functional perspective, however, both variants depicted in Fig. 8 are equivalent to one another.

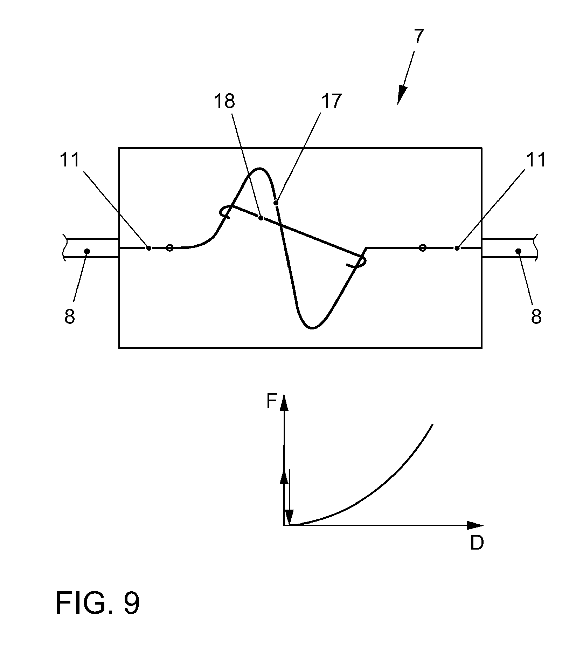

Fig. 9 shows a release system according to another embodiment of the invention.

In the embodiment of Fig. 9, the release system 7 comprises a V-shaped or S-shaped hook 17 and an additional loop wire 18 encompassing the hook 17. The end portions of the V-shaped or S-shaped hook 17 are coupled to the wires 11 of two cable arrangements 8 which may be arranged similar to the embodiment shown in Fig. 1.

The functionality of this release system 7 is as follows. As long as the load acting on the support structure of the suspension arrangement and on the release system 7 is below a predetermined threshold value, the release system 7 does not show any deflection. However, when the load F exceeds the predetermined threshold value, the tension acting on the release system 7, and in particular on the V-shaped or S-shaped hook 17, is such that the additional wire 18 breaks. As can be taken from the force deflection characteristic shown in Fig. 9, as soon as the additional wire 18 breaks, the load first drops to ON, and then the deflection of the V-shaped or S-shaped hook 17 increases in conformity with the force deflection characteristic shown in Fig. 9 as the load acting on the system increases so as to deform the V-shaped or S-shaped hook 17.

In principle, the release system of Fig. 9 can be used as a replacement for or in addition to the embodiment of Fig. 6.

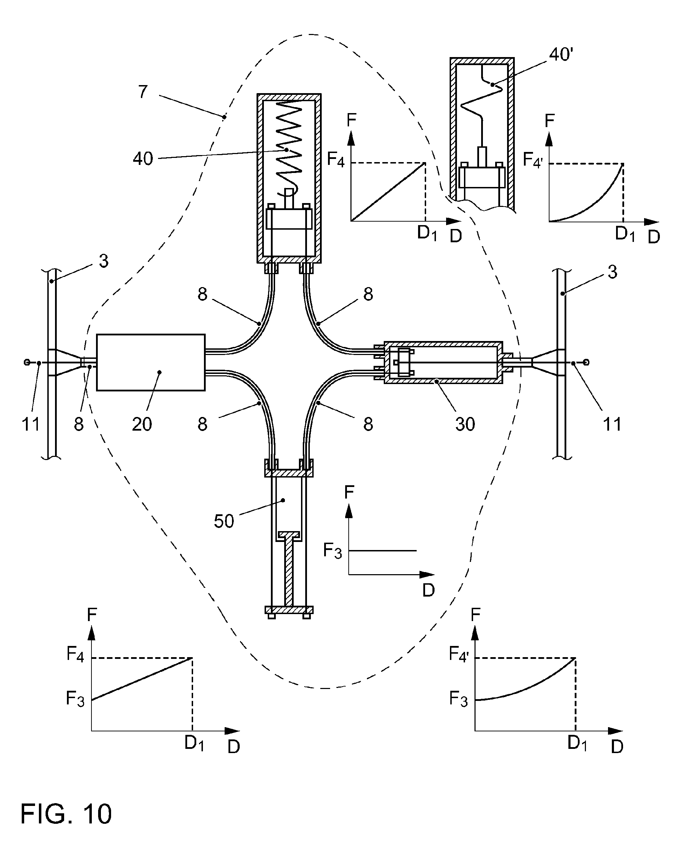

Fig. 10 shows a further embodiment of a suspension arrangement of the present invention.

In particular, Fig. 10 shows the structure of a single release system 7 according to an embodiment of the invention, whereby this release system 7 is coupled to the left and right side margins 3 of the support structure similar to the embodiment of Fig. 1.

In the embodiment of Fig. 10, the release system 7 comprises a first cable arrangement 8, whereby the sheath of this first cable arrangement 8 is coupled to the left side margin 3 of the support structure, while the wire 11 of this first cable arrangement 8 is to be coupled to a left side element of the seat frame 9. This first cable arrangement 8 is further coupled to a cable splitter arrangement 20 which is designed such that it transfers the motion of the wire of the first cable arrangement 8 to the wires of two output-side cable arrangements 8 coupled to a spring unit 40 and a gas spring unit 50, respectively. In a similar manner, a second cable arrangement 8 is coupled to the right side margin 3 of the support structure, whereby the wire 11 of this second cable arrangement 8 is to be coupled to a right side element of the seat frame 9. Moreover, this second cable arrangement 8 is also coupled to a cable splitter 30 which transforms the motion of the wire 11 into a corresponding motion of two output-side cable arrangements 8 and the corresponding wires thereof, these output-side cable arrangements 8 again being coupled to the spring unit 40 and the gas spring unit 50.

The spring unit 40 comprises a normal wire spring which is tensioned and straightened depending on the load acting thereon. The force deflection characteristic of this wire spring is depicted in the upper portion of Fig. 10. Moreover, the gas spring unit 50 comprises a normal gas spring having the force deflection characteristic shown in the lower portion of Fig. 10.

Due to the combination of the spring unit 40 with the gas spring unit 50 the release system 7 exhibits the overall force deflection characteristic shown in the lower left part of Fig. 10, this force deflection characteristic being similar to the force deflection characteristic of the embodiment shown in Fig. 6.

Alternatively, it is already indicated in Fig. 10 that instead of the spring unit 40 a V-shaped hook/S-shaped hook unit 40' can be used having the force deflection characteristic shown in the upper right part of Fig. 10. If this V-shaped/S-shaped hook is combined with the gas spring unit 50, the release system 7 exhibits the overall force deflection characteristic shown in the lower right part of Fig. 10.

Similar to the embodiments described above, a plurality of such release systems 7 may be used in vertically spaced relationship in one and the same suspension arrangement, the individual release systems 7 having similar or different force deflection characteristics.

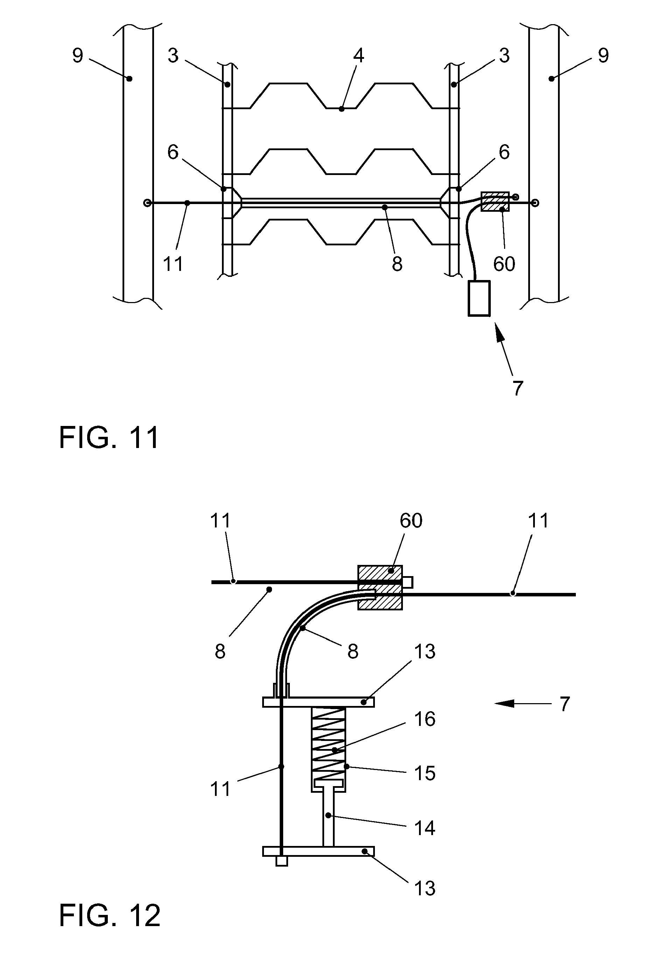

Fig. 11 shows a further embodiment of a suspension arrangement of the present invention. In particular, Fig. 11 shows an embodiment for a release system 7 arranged between one of the side margins 3 of the support structure and one of the side elements of the seat frame 9.

In the embodiment shown in Fig. 11, the release system 7 is coupled by a single cable arrangement 8 to both side margins 3 of the support structure, whereby the sheath of the cable arrangement 8 extends between the two side margins 3 as shown in Fig. 11. One end of the wire 11 running through the sheath of the cable arrangement 8 is attached to a left side element of the seat frame 9. The other end of the wire 11 is coupled to a coupling unit 60 and attached thereto.

Fig. 12 shows a detailed representation of the coupling between the Bowden cable arrangement 8, the coupling unit 60 and the release system 7. In the embodiment of Fig. 12, the release system 7 again comprises a gas spring in combination with a wire spring integrated into the housing 15 of the gas spring similar to the embodiment of Fig. 6.

However, contrary to the embodiment of Fig. 6, only one of the two end members 13 of the gas spring unit is coupled to a wire 11 of an additional cable arrangement 8, whereby the sheath of this additional cable arrangement 8 is supported at the opposite end member 13 of the gas spring unit. The coupling unit 60 is provided to transfer the motion of the first Bowden cable arrangement 8 to the second Bowden cable arrangement 8 which is coupled to the gas spring unit.

The coupling unit 60 is held in place by the cables of both cable arrangements 8. As soon as the load has reached the threshold value to activate the release system, the coupling unit 60 moves backwards together with the support structure defined by the side margins 3 and the transverse wires 4, and the free length of the wire 11 between the end members 13 decreases as the free length of the wire 11 between the coupling unit 60 and the corresponding side element of the seat frame 9 increases.

The embodiment shown in Figs. 11 and 12 exhibits the same force deflection characteristic as the embodiment shown in Fig. 6 and the embodiment shown in Fig. 10.

Although some embodiments of the invention were described in connection with the drawings in detail, modifications can be made without departing from the scope of the invention as defined by the appended claims. In particular, the invention is not limited to the use of a flexmat as a support structure as shown in the drawings, but in principle any more or less resilient platform element can be used. It is only necessary that the support structure has side margins to which the cable arrangement of the release system can be coupled. In addition, the invention is not limited to the use in vehicle seats, but can be used in any kind of seat.

## Claims

1. A suspension arrangement for a seat, comprising:
a support structure having first and second side margins (3), and
a release system (7) coupled to at least one of the first and second side margins (3) of the support structure by a cable arrangement (8) and to be coupled to a seat frame (9) of the seat,
wherein the release system (7) is designed such that it substantially does not yield under a load acting on the support structure, which is below a predetermined threshold value, while it yields in accordance with a predetermined characteristic under a load exceeding the threshold value.

2. A suspension arrangement according to claim 1, wherein the support structure comprises a plurality of transverse members (4) extending between the first and second side margins (3).

3. The suspension arrangement according to claim 2, wherein the transverse members (4) are transverse wires.

4. The suspension arrangement according to any one of preceding claims, wherein the release system comprises a gas spring (14, 15) combined with a wire spring (16) to provide the predetermined force deflection characteristic.

5. The suspension arrangement according to any one of the preceding claims, wherein the release system (7) comprises a V-shaped or S-shaped hook to provide the predetermined force deflection characteristic.

6. The suspension arrangement according to claim 5, wherein the release system (7) comprises the V-shaped or S-shaped hook (17) in combination with a wire loop (18) encompassing the V-shaped or S-shaped hook (17).

7. The suspension arrangement according to any one of the preceding claims, wherein the release system (7) is coupled via a first cable arrangement (8) to the first side margin (3) and via a second cable arrangement (8) to the second side margin (3) of the support structure.

8. The suspension arrangement according to claim 7, wherein a sheath of the first cable arrangement (8) is coupled to the first side margin (3) via a first support member (6), while a sheath of the second cable arrangement (8) is coupled to the second side margin (3) via a second support member (6), wherein wires (11) of the first and second cable arrangements run through the sheath of the respective cable arrangement (8) and extend through the first and second side members (6), respectively, and are to be coupled to the seat frame (9).

9. The suspension arrangement of claim 8, wherein the release system (7) comprises a first end member (13) and a second end member (13) spaced from the first end member (13), the sheath of the first cable arrangement (8) being coupled to the first end member (13), while the sheath of the second cable arrangement (8) is coupled to the second end member (13), and the wire (11) of the first cable arrangement (8) being coupled to the second end member (13), while the wire (11) of the second cable arrangement (8) is coupled to the first end member (13).

10. The suspension arrangement according to claim 9, wherein the release system (7) comprises spring means (14-18) arranged between the first and second end members (13) of the release system (7), the spring means (14-19) providing the predetermined force deflection characteristic of the release system (7).

11. The suspension arrangement according to any one of the preceding claims, wherein the release system (7) is arranged between the first and second side margins (3) of the support structure in a horizontal direction of the support structure.

12. The suspension arrangement according to claim 11, wherein the release system (7) is coupled to a stiffening member (10) extending in a vertical direction of the support structure.

13. The suspension arrangement according to any one of preceding claims, wherein the release system (7) comprises a first cable splitter unit (20) coupled to the first side margin (3) of the support structure by a first cable arrangement (8) and a second cable splitter unit (30) coupled to the second side margin (3) of the support structure, and wherein the release system (7) comprises a gas spring unit (50) in combination with a spring unit (40) or in combination with a unit (40') having a V-shaped or S-shaped hook being arranged between the first and second cable splitter units (20, 30) and being actuated by additional cable arrangements (8) coupled to the first and second cable splitter units (20, 30).

14. The suspension arrangement according to any one of claims 1-9, wherein the release system (7) is arranged between one of the first and second side margins (3) of the support structure and the seat frame (9) in a horizontal direction of the support structure.

15. The suspension arrangement according to claim 14, wherein the release system (7) comprises spring means (14-19) arranged between first and second end members (13) of the release system, wherein the release system (7) is coupled via a first cable arrangement (8) to a coupling unit (60), the coupling unit (60) being coupled by a second cable arrangement (8) to the first and second side margins (3) of the support structure.

16. The suspension arrangement according to claim 15, wherein a wire (11) of the first cable arrangement (8) is coupled to the first end member (13) of the release system (7), while a sheath of the first cable arrangement (8) is coupled to the second end member (13) of the release system (7) and to the coupling unit (60), whereby the wire (11) of the first cable arrangement (8) extends through the coupling unit (60) and is to be coupled to a first side element of the seat frame (9), and
wherein a sheath of the second cable arrangement (8) is coupled to the first and second side margins (3) of the support structure, while the wire (11) of the second cable arrangement (8) is coupled to the coupling unit (60), extends through the sheath of the second cable arrangement (8) and is to be coupled to a second side element of the seat frame (9).

17. The suspension arrangement according to claim 16, wherein the second cable arrangement (8) substantially extends in a horizontal direction of the support structure between the first and second side margins (3) of the support structure.

18. The suspension arrangement according to any one of the preceding claims, wherein a plurality of the release systems (7) is arranged in a vertically spaced relationship at the support structure (3, 4).

19. The suspension arrangement according to claim 18, wherein the individual release systems (7) have different threshold values.

20. The suspension arrangement according to claim 18 or claim 19, wherein the individual release systems (7) are designed such that they yield in accordance with different force deflection characteristics.
